# EUROPÄISCHE PATENTSCHRIFT

(11) **EP 0 583 732 B1**
(45) Veröffentlichungstag und Bekanntmachung des Hinweises auf die Patenterteilung: **02.07.1997**
(21) Anmeldenummer: 93112894.6
(22) Anmeldetag: 11.08.1993
(51) Int. Cl.: A01K 3/00, G01G 17/08

(54) **Betäubungsvorrichtung sowie Verfahren zu deren Betrieb**
Method and means for stunning
Procédé et dispositif pour étourdir

(30) Priorität: 11.08.1992 DE 4226596
(43) Veröffentlichungstag der Anmeldung: 23.02.1994
(73) Patentinhaber: Banss Maschinenfabrik GmbH & Co. KG, D-35216 Biedenkopf (DE)
(72) Erfinder: Runkel, Gerhard, D-6347 Angelburg-Gönnern (DE)
(74) Vertreter: Klunker . Schmitt-Nilson . Hirsch

(56) Entgegenhaltungen:
- EP-A- 0 471 470
- WO-A-81/01196
- DE-A- 2 447 928
- FR-A- 2 456 942
- US-A- 4 256 569

## Beschreibung

Die Erfindung betrifft eine Vorrichtung zum Betäuben von Schlachttieren, insbesondere Rindern, mit einem einen Gestellboden und einen Gestellständer aufweisenden Gestell zur Aufnahme eines Schlachttieres während des Betäubungsvorgangs, wobei eine Seitenwand des Gestells zum Ausbringen des betaübten Schlachttieres geöffnet werden kann. Eine derartige Vorrichtung ist z.B. bereits aus der EP-A-0,396,148 bekannt. Die Erfindung betrifft auch ein Verfahren zur Bestimmung des Schlachttiergewichts.

Derartige Vorrichtungen sind in Schlachthöfen zu Anfang einer Schlachtlinie angeordnet, die darüberhinaus weitere Vorrichtungen zur Durchführung der einzelnen Arbeitsschritte bei der Schlachtung aufweist. Zur Bestimmung des Schlachttiergewichts ist in einer derartigen Schlachtlinie eine Wiegevorrichtung vorgesehen, die entweder der Betäubungsvorrichtung vorgeordnet oder dieser nachgeordnet ist, um das Schlachttiergewicht vor dem während des Schlachtvorgangs erfolgenden Abtrennen von Körperteilen des Schlachttieres bestimmen zu können. In der Regel ist dabei die genannte Wiegevorrichtung der Betäubungsvorrichtung nachgeordnet, um eine Verfälschung des Wiegeergebnisses durch Schlachttierbewegungen auszuschließen.

Üblicherweise ist die Wiegevorrichtung in eine Hebevorrichtung (Elevator) integriert, die dazu dient, das aus einer Betäubungsvorrichtung ausgegebene Schlachttier an Haken hängend an einen überflur angeordneten Hängeförderer zu übergeben. Eine exakte Wägung durch eine derartig installierte Wiegevorrichtung setzt natürlich voraus, daß zwischenzeitlich, also auf dem weg des Schlachttieres von der Betäubungsvorrichtung zum Elevator hin keine das Schlachttiergewicht verfälschende Manipulationen am Schlachttierkörper stattfinden. Somit wird durch den hier beispielhaft am Elevator vorgesehenen Installationsort der Wiegevorrichtung bestimmt, daß der eigentliche Schlachtvorgang erst in einem hier durch den Elevator vorgegebenen Abstand von der Betäubungsvorrichtung beginnen kann.

Der Erfindung liegt die Aufgabe zugrunde, eine Vorrichtung bzw. ein Verfahren zu schaffen, die bzw. das den Beginn der Schlachtung unmittelbar nach Ausgabe des Schlachttieres aus einer Betäubungsvorrichtung ermöglicht.

Diese Aufgabe wird durch die Merkmale des Anspruchs 1 bzw. des Anspruchs 9 gelöst.

Aus dem Dokument EP-A-0 471 470 ist es bekannt, ein Schlachttier zuerst auf einer Wiegeplattform zu wiegen und dann in eine anschließende Betäubungsbox zu treiben.

Das Dokument WO-A-81/01196 zeigt ein Käfigartiges Gestell, das über vier elektrische Kraftmeßelemente auf dem Boden ruht. Ein in das Gestell gebrachtes Tier kann so gewogen werden. Das Gestell ist nicht zur Schlachttierbetäubung vorgesehen.

Die erfindungsgemäße Betäubungsvorrichtung weist ein Gestell zur Aufnahme des zu betäubenden Schlachttieres auf, das mit einer Meßeinrichtung zur Bestimmung des Schlachttiergewichts versehen ist. Hierdurch wird eine Kombination einer Betäubungsvorrichtung mit einer Wiegevorrichtung geschaffen, die die Bestimmung des Schlachttieregewichts in der Betäubungsvorrichtung und somit eine der Schlachttierausgabe aus der Betäubungsvorrichtung unmittelbar nachfolgende Schlachtung des Schlachttieres ermöglicht.

Die erfindungsgemäße Kombination einer Betäubungsvorrichtung mit einer Wiegevorrichtung gestattet somit auch die Anwendung eines Schlachtverfahrens, bei dem das Schlachttiergewicht verändernde Manipulationen am Schlachttierkörper bereits am in liegender Position aus der Betäubungsvorrichtung ausgegebenen Schlachttierkörper vorgenommen werden.

Bei dem Gestellboden der erfindungsgemäßen Betäubungsvorrichtung muß es sich nicht notwendigerweise um einen im wesentlichen ebenen, durch das Schlachttier zu betretenden Boden handeln. Vielmehr kann der Gestellboden auch so ausgebildet sein, daß eine im Gestellboden hängende Aufnahme des Schlachttieres gegeben ist, wobei die Schlachttierbeine keine Bodenberührung haben müssen.

Die Unterbringung der Meßeinrichtung kann etwa im Gestellboden oder auch im Gestellständer erfolgen.

Gemäß Anspruch 4 kann jede Gestellstütze eines durch mehrere Gestellstützen gebildeten Gestellständers, der die auf den Gestellboden wirkende Gestellast auf eine Aufstandsfläche, etwa den Schlachthofboden, überträgt, mit einer Meßeinrichtung versehen sein. Hierbei erweist es sich als vorteilhaft, wenn die einzelnen durch die verschiedenen Meßeinrichtungen ermittelten Meßwerte in einem Meßwertrechner zur Bestimmung des Schlachttiergewichts aufaddiert werden.

Eine weitere Möglichkeit besteht gemäß Anspruch 5 darin, bei mehreren die Gestellast auf die Aufstandfläche verteilenden Gestellstützen lediglich in einer Gestellstütze eine Meßeinrichtung vorzusehen und die übrigen Gestellstützen zumindest in vertikaler Richtung kräftemäßig vom Gestellboden zu entkoppeln, um mit der einzigen Meßeinrichtung unmittelbar, das heißt ohne Meßwertrechnung, das Schlachttiergewicht bestimmen zu können. Hierzu können etwa die nicht mit der Meßeinrichtung belegten Gestellstützen durch geeignete Übertragungsgelenke so mit dem die Gestellast aufnehmenden Gestellboden verbunden werden, daß einerseits eine statisch bestimmte Gestellstruktur gegeben ist, andererseits die Übertragungsgelenke nur die Übertragung von Kräften vom Gestellboden auf die betreffenden Gestellstützen erlauben, die keine vertikale Kraftkomponente aufweisen.

Gemäß Anspruch 6 ist die Möglichkeit vorgesehen, die Meßeinrichtung nicht als einzeln handhabbares, in die Gestellstruktur zu integrierendes Bauteil auszubilden, sondern einen oder mehrere Teilbereiche der Gestellstruktur, also des Gestellbodens und / oder zumindest einer Gestellstütze als Meßeinrichtung oder zumindest als Bestandteil der Meßeinrichtung auszubilden.

Diese Möglichkeit erweist sich besonders daher als vorteilhaft, weil so auf relativ einfache Art und Weise bereits existente Betäubungsvorrichtungen, etwa durch Applikation von Dehnungsmeßstreifen (DMS) in bestimmten Strukturbereichen in eine kombinierte Betäubungs-/Wiegevorrichtung umgewandelt werden können.

Eine relativ einfache Art und Weise der Umwandlung einer existenten Betäubungsvorrichtung in eine kombinierte Betäubungs-/Wiegevorrichtung besteht auch darin, etwa als Druckmeßdosen ausgebildete Meßeinrichtungen vorzusehen, die zwischenliegend zwischen dem Schlachthofboden und jeder eine vertikale Kraftkomponente übertragenden Gestellstütze vorgesehen werden. Bei einer konventionell ausgeführten, vier Standstützen aufweisenden Betäubungsvorrichtung bedeutet dies, daß die Betäubungsvorrichtung mit ihren Standstützen einfach auf Druckmeßdosen gestellt wird.

Die bekannten Betäubungvorrichtungen dienen vor allem dazu, die Schlachttiere vor dem eigentlichen Betäubungsvorgang zu immobilisieren, um zum einen, etwa bei einem elektrischen Betäubungsvorgang, einen besseren Zugang zu den Elektroden-Ansetzpunkten zu haben, zum anderen, Verletzungen des Schlachttieres beim Betäubungsvorgang, die durch strominduzierte Muskelkrämpfe bei der elektrischen Betäubung hervorgerufen werden können, zu vermeiden. Weiterhin dient die Immobilisierung, etwa auch bei einer mit einer Bolzenschußeinrichtung versehenen Betäubungsvorrichtung dazu, daß der Arbeitsplatz des Betäubers unfallschutzgerecht gestaltet ist.

Um durch den Wiegevorgang möglichst exakte Meßergebnisse zu erhalten, die nicht durch Bewegungen des Schlachttieres verfälscht sind, erfolgt die Messung entsprechend dem erfindungsgemäßen Verfahren gemäß Anspruch 9 entweder nach der Immobilisierung des Schlachttieres in der Betäubungsvorrichtung und vor der eigentlichen Betäubung oder der Betäubung unmittelbar nachfolgend, vor der Ausgabe des Schlachttierkörpers aus der Betäubungsvorrichtung.

Ein bevorzugtes Ausführungsbeispiel der erfindungsgemäßen Betäubungsvorrichtung wird anhand beiliegender Zeichnung näher erläutert.

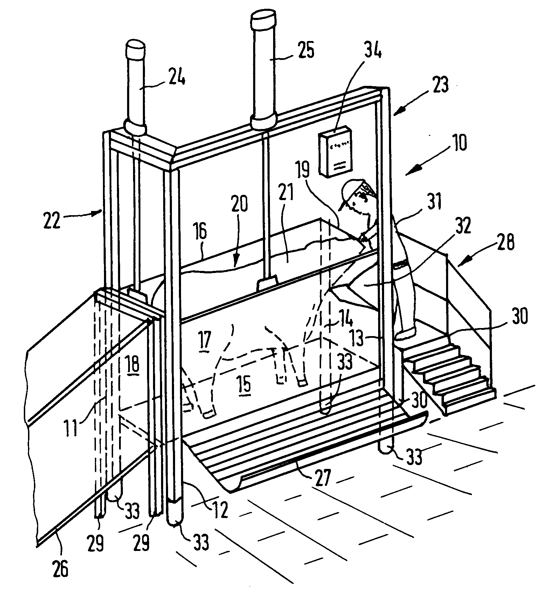

Die in der Zeichnung dargestellte Betäubungsvorrichtung weist ein Gestell 10 auf mit vier Gestellstützen 11, 12, 13, 14, die durch einen Gestellboden 15 miteinander verbunden sind. Zwei Seitenwände 16, 17 sowie eine Rückwand 18 und eine Vorderwand 19 bilden einen lediglich nach oben hin offenen Aufnahmeraum 20 zur Aufnahme eines zu betäubenden Schlachttieres 21.

Die Rückwand 18 sowie die Seitenwand 17 sind mittels an Hubrahmen 22, 23 angeordneten Hubzylindern 24, 25 vertikal verfahrbar, so daß der Aufnahmeraum 20 nach hinten, einem Treibgang 26 zugewandt, sowie zur Seite, einem Ausgaberost 27 zugewandt, geöffnet werden kann.

Benachbart der Vorderwand 19 ist ein Arbeitspodest 28 angeordnet, das wie der Treibgang 26 eigene Standfüße 29 bzw. 30 aufweist und somit vom Gestell 10 kräftemäßig entkoppelt ist. Auf dem Arbeitspodest 28 befindet sich ein Schlachthofbediensteter 31, der die Betäubung des Schlachttieres 21 vornimmt, das zu diesem Zweck mit seinem Kopf auf einem Kopfkeil 32 an der Vorderwand 19 aufliegend im Aufnahmeraum 20 angeordnet ist. Zwischen den Gestellstützen 11, 12, 13, 14 und dem die Aufstandsfläche bildenden Schlachthofboden sind Druckmeßdosen 33 angeordnet. Das gesamte Gestell 10 steht somit auf den vier Druckmeßdosen 33.

Nachfolgend soll der Betrieb der durch die Kombination der Druckmeßdosen 33 mit dem Gestell 10 gegebenen Betäubungs-/Wiegevorrichtung näher erläutert werden. Das für die Schlachtung bestimmte Schlachttier 21 wird durch den Treibgang 26 bei geöffneter Rückwand 18 und geschlossener Seitenwand 17 in den Aufnahmeraum 20 eingetrieben. Anschließend wird die Rückwand 18 durch Betätigung des Hubzylinders 24 abgesenkt, wobei hier nicht näher dargestellte, etwa an der Rückwand angeordnete Drängmittel das Schlachttier so weit nach vorne gegen die Vorderwand 19 drängen, daß es mit seinem Kopf auf dem Kopfkeil 32 aufliegt. Zusätzlich können an den Seitenwänden 16, 17 geeignete Drängmittel vorhanden sein, die das Schlachttier 21 auch seitlich immobilisieren.

Nach Immobilisierung des Schlachttieres wird durch den Schlachthofbediensteten 31 die hier nicht näher dargestellte, etwa als Elektrodeneinrichtung oder Bolzenschußeinrichtung ausgebildete Betäubungseinrichtung im Kopfbereich des Schlachttieres 21 angelegt, so daß eine Betäubung des Schlachttieres bewirkt wird. Nach Durchführung der Betäubung werden über eine Schaltereinrichtung 34 vom Schlachthofbediensteten 31 die vier zwischen den Gestellstützen 11, 12, 13, 14 und dem Schlachthofboden angeordneten Druckmeßdosen 33 aktiviert.

Die Druckmeßdosen 33 können in bekannter Weise mit Dehnungsmeßstreifen (DMS) bestückt sein, die durch Integration in eine elektrische Brückenschaltung elektrische Signale liefern, die mit der jeweils in der zugeordneten Gestellstütze gegebenen vertikalen Belastungskomponente korrespondieren und somit einen Meßwert zur Bestimmung des Schlachttierkörpergewichts bzw. des jeweils auf eine Gestellstütze 11, 12, 13, 14 entfallenden Gewichtsanteils ermöglichen.

Nach erfolgter Meßwertbestimmung bzw. Gewichtsermittlung wird mittels des Hubzylinders 25 die Seitenwand 17 angehoben und das Schlachttier 21 auf den angrenzenden Ausgaberost 27 ausgegeben. Zur Unterstützung der Ausgabe kann die Seitenwand 16 oder eine, hier nicht näher dargestellte, Ausgabeeinrichtung in Richtung auf den Ausgaberost 27 verfahrbar gestaltet sein.

Der Ausgaberost 27 kann mit dem Gestell 10 verbunden oder kräftemäßig von diesem entkoppelt sein, je nachdem, ob das Eigengewicht des Ausgaberostes 27 genauso wie das des Gestells 10 und den daran befindlichen Anbauteilen bei der Eichung der Druckmeßdosen 33 berücksichtigt ist oder nicht.

Anstatt des Ausgaberostes 27 kann natürlich auch ein bekannter, hier nicht näher dargestellter, Plattenförderer vorgesehen sein, wobei es die erfindungsgemäße Kombination aus Betäubungsvorrichtung und Wiegevorrichtung ermöglicht, mit dem Schlachtvorgang bereits unmittelbar nachfolgend der Betäubungsvorrichtung auf dem Plattenförderer zu beginnen.

## Patentansprüche

1. Vorrichtung zum Betäuben von Schlachttieren (21), insbesondere Rindern, mit einem einen Gestellboden (15) und einen Gestellständer (11, 12, 13, 14) aufweisenden Gestell (10) zur Aufnahme eines Schlachttieres (21) während des Betäubungsvorgangs, wobei eine Seitenwand (17) des Gestells (10) zum Ausbringen des betäubten Schlachttieres (21) geöffnet werden kann,
**dadurch gekennzeichnet,**
daß das Gestell (10) mit einer Einrichtung zur Bestimmung des Schlachttiergewichts (Meßeinrichtung 33) versehen ist.

2. Vorrichtung nach Anspruch 1,
**dadurch gekennzeichnet,**
daß die Meßeinrichtung (33) im Gestellboden (15) angeordnet ist.

3. Vorrichtung nach Anspruch 1,
**dadurch gekennzeichnet,**
daß die Meßeinrichtung im Gestellständer (11,12,13,14) angeordnet ist.

4. Vorrichtung nach Anspruch 3,
**dadurch gekennzeichnet,**
daß der Gestellständer mehrere die auf den Gestellboden (15) wirkende Gestellast auf eine Aufstandfläche übertragende Gestellstützen (11,12,13,14) aufweist, wobei jede Gestellstütze (11,12,13,14) mit einer Meßeinrichtung (33) versehen ist.

5. Vorrichtung nach Anspruch 3,
**dadurch gekennzeichnet,**
daß der Gestellständer mehrere die auf den Gestellboden (15) wirkende Gestellast auf eine Aufstandfläche übertragende Gestellstützen (11,12,13,14) aufweist, wobei zumindest eine Gestellstütze (11 oder 12 oder 13 oder 14) mit einer Meßeinrichtung (33) versehen ist, und die übrige(n) Gestellstütze(n) zumindest in vertikaler Richtung kräftemäßig vom Gestellboden (15) entkoppelt ist (sind).

6. Vorrichtung nach einem oder mehreren der vorangehenden Ansprüche,
**dadurch gekennzeichnet,**
daß der Gestellboden (15) und/oder zumindest eine Gestellstütze (11, 12, 13, 14) zumindest in einem Teilbereich als Meßeinrichtung (33) oder als ein Bestandteil dieser ausgebildet ist.

7. Vorrichtung nach einem oder mehreren der vorangehenden Ansprüche,
**dadurch gekennzeichnet,**
daß die Meßeinrichtung als Druckmeßdose (33) ausgebildet ist.

8. Vorrichtung nach einem oder mehreren der vorangehenden Ansprüche,
**dadurch gekennzeichnet,**
daß die Meßeinrichtung (33) Dehnungsmeßstreifen (DMS) aufweist.

9. Verfahren zur Bestimmung des Schlachttiergewichts,
**dadurch gekennzeichnet,**
daß die Bestimmung des Schlachttiergewichts nach der Immobilisierung des betreffenden Schlachttieres (21) in einer Betäubungsvorrichtung entweder vor Durchführung der Betäubung oder nach Durchführung der Betäubung vor der Ausgabe des betäubten Schlachttieres aus der Betäubungsvorrichtung erfolgt.

## Claims

1. An apparatus for stunning animals (21), in particular cattle, for butchering having a rack (10) with a floor (15) and a stand (11, 12, 13, 14) for receiving an animal (21) during the stunning process, one side wall (17) of the rack (10) being adapted to be opened for releasing the stunned animal (21), characterized in that the rack (10) is provided with a device for determining the weight of the animal (measuring device 33).

2. The apparatus of claim 1, characterized in that the measuring device (33) is disposed in the floor (15) of the rack.

3. The apparatus of claim 1, characterized in that the measuring device is disposed in the stand (11 12, 13, 14).

4. The apparatus of claim 3, characterized in that the stand has a plurality of supports (11, 12, 13, 14) transmitting the rack load acting on the floor (15) of the rack onto a base surface, each support (11, 12, 13, 14) being provided with a measuring device (33).

5. The apparatus of claim 3, characterized in that the stand has a plurality of supports (11, 12, 13, 14) transmitting the rack load acting on the floor (15) of the rack onto a base surface, at least one support (11 or 12 or 13 or 14) being provided with a measuring device (33) and the other support(s) being decoupled from the floor (15) of the rack in terms of force at least in the vertical direction.

6. The apparatus of one or more of the above claims, characterized in that the floor (15) of the rack and/or at least one support (11, 12, 13, 14) is formed at least in a partial area as a measuring device (33) or as a component thereof.

7. The apparatus of one or more of the above claims, characterized in that the measuring device is formed as a pressure pickup (33).

8. The apparatus of one or more of the above claims, characterized in that the measuring device (33) has a wire strain gauge.

9. A method for determining the weight of animals for butchering, characterized in that the weight of the animal in question is determined after the animal (21) is immobilized in a stunning apparatus either before stunning is performed or after stunning is performed before the stunned animal is released from the stunning apparatus.

## Revendications

1. Installation d'anesthésie d'animaux d'abattage (21), notamment de bovins, comportant un bâti (10) présentant un plancher (11) et une structure (11, 12, 13, 14) pour recevoir un animal d'abattage (21) pendant le processus d'anesthésie, une paroi latérale (17) du bâti (10) pour extraire l'animal d'abattage anesthésié pouvant être ouverte, caractérisée en ce que le bâti est pourvu d'un dispositif pour déterminer le poids de l'animal d'abattage (dispositif de mesure (33)).

2. Installation selon la revendication 1, caractérisée en ce que le dispositif de mesure (33) est disposé dans le plancher (15) du bâti.

3. Installation selon la revendication 1, caractérisée en ce que le dispositif de mesure est disposé dans la structure (11, 12, 13, 14).

4. Installation selon la revendication 3, caractérisée en ce que la structure présente plusieurs montants (11, 12, 13, 14) qui transmettent la charge appliquée au fond (15) du bâti à une surface d'appui, chaque montant (11, 12, 13, 14) étant pourvu d'un dispositif de mesure.

5. Installation selon la revendication 3, caractérisée en ce que la structure de bâti présente plusieurs montants (11, 12, 13, 14) qui transmettent la charge appliquée au fond (15) du bâti à une surface d'appui, au moins l'un des montants (11 ou 12 ou 13, ou 14) étant pourvu d'un dispositif de mesure et l'un ou les autre(s) montant(s) de la structure étant désaccouplé(s) dynamiquement en direction verticale du plancher (15) du bâti.

6. Installation selon l'une ou plusieurs des revendications précédentes, caractérisée en ce que le plancher (15) du bâti et/ou au moins un montant (11, 12, 13, 14) de la structure est configuré, au moins dans une zone partielle, en dispositif de mesure (33) ou en une partie de ce dispositif de mesure.

7. Installation selon l'une ou plusieurs des revendications précédentes, caractérisée en ce que le dispositif de mesure est constitué en boîte de mesure à pression (33).

8. Installation selon l'une ou plusieurs des revendications précédentes, caractérisée en ce que le dispositif de mesure est constitué en jauge de dilatation (33) DMS.

9. Procédé de détermination du poids de l'animal d'abattage, caractérisée en ce que la détermination du poids de l'animal d'abattage est effectuée après l'immobilisation de l'animal d'abattage concerné (21) dans une installation d'anesthésie, soit avant l'accomplissement de l'anesthésie, soit après accomplissement de l'anesthésie, avant l'extraction de l'animal d'abattage anesthésié de l'installation d'anesthésie.
